# EUROPÄISCHE PATENTSCHRIFT

(11) **EP 1 629 251 B1**
(45) Veröffentlichungstag und Bekanntmachung des Hinweises auf die Patenterteilung: **06.12.2006**
(21) Anmeldenummer: 04738626.3
(22) Anmeldetag: 05.06.2004
(51) Int. Cl.: G01B 7/004, G01D 5/20

(54) **ANORDNUNG ZUM ERMITTELN DER RAUMPOSITION UND DES VERHALTENS VON ZUMINDEST ZEITWEILIG VERHARRENDEN OBJEKTEN**
ARRANGEMENT FOR DETERMINING THE SPATIAL POSITION AND BEHAVIOR OF AT LEAST TEMPORARILY STATIONARY OBJECTS
DISPOSITIF PERMETTANT DE DETERMINER LA POSITION DANS L'ESPACE ET LE COMPORTEMENT D'OBJETS AU MOINS TEMPORAIREMENT STATIONNAIRES

(30) Priorität: 05.06.2003 DE 10326016; 10.09.2003 DE 10342324
(43) Veröffentlichungstag der Anmeldung: 01.03.2006
(73) Patentinhaber: DisplayCom GmbH, 07743 Jena (DE)
(72) Erfinder: LAUSCH, Holger, 07743 Jena (DE)
(74) Vertreter: Bock, Gerhard
(86) Internationale Anmeldenummer: PCT/DE2004/001172
(87) Internationale Veröffentlichungsnummer: WO 2004/109224

(56) Entgegenhaltungen:
- EP-A- 0 928 976
- DE-A1- 19 800 488
- FR-A- 2 592 354

## Beschreibung

Die Erfindung betrifft eine Anordnung zum Ermitteln der Raumposition und des Verhaltens von zumindest zeitweilig verharrenden Objekten, gemäß der Gattung der Patentansprüche. Sie ist in der Sicherheitstechnik ebenso verwendbar wie bei der Ortung von Fahrzeugen und Werkzeugen, sofern dabei ein Wechsel von einem Zustand der Ruhe in einen Zustand der Bewegung oder umgekehrt stattfindet. Sie ist insbesondere geeignet, die Raumposition und das Verhalten einer Vielzahl von unterschiedlichen Objekten gleichzeitig zu überwachen.

Bekannt sind ein Verfahren und eine Vorrichtung zur Steuerung und Positionsbestimmung eines Instruments oder Gerätes (DE 102 25 518 A1) mit mindestens einem ein senkrecht zur Geräteachse befindliches magnetisches Moment erzeugenden, unabhängig von dem Instrument oder Gerät rotierbaren Magneten. Dieser benötigt zu seiner Rotation einen besonderen Antrieb, bei dessen Ausfall das Verfahren nicht durchführbar ist.

EP-A-0 928 976 beschreibt eine Anordrung zur Ermitteln der Raumposition und des Bewegungsverhaltens von mindestens zeitweilig verharrenden Objekten.

In dieser Anordnung, ist aber nicht jedem Objekt ein Energiegeber zugeordnet.

FR-A-2 592 354 beschreibt eine Anordnung bei der eine Schwungmasse als Energiespeicher verwendet wird, die über ein Freilaufgetriebe an die Anordnung angekoppelt ist.

DE-198 00 488 A1 beschreibt eine Anordnung, die die Ermittlung der Raumposition von Objekten auch im Nachlauf ermöglicht.

Durch die Erfindung soll die Unzulänglichkeit des Standes der Technik behoben werden. Es ist also Aufgabe der Erfindung, eine Anordnung zum Ermitteln der Raumposition und des Verhaltens von zumindest zeitweilig verharrenden Objekten zu schaffen, die eines gesonderten Antriebs des Magneten grundsätzlich nicht bedarf.

Gemäß der Erfindung wird diese Aufgabe durch die kennzeichnenden Merkmale des ersten Patentanspruchs gelöst und durch die Merkmale der abhängigen Ansprüche weiter ausgestaltet. Durch eine geeignete flexible Verbindung zwischen den elektrischen oder magnetischen Mittel und den Objekten ist es also möglich, die aus der Bewegung der Wirbelfelder im Raum resultierenden Wirbelstromsignale im Nachlauf zu erzeugen.

Damit die sich die vorzugsweise um wenigstens eine Achse drehenden elektrischen oder magnetischen Mittel auch beim Verharren der Objekte nachhaltig detektierbare Wirbelfelder erzeugen können, müssen die Drehfrequenzen der genannten Mittel ca. 1-4 Hz und mehr betragen. Außerdem soll der durch den Energiegeber induzierte Nachlauf der elektrischen oder magnetischen Mittel mehrere, bspw. zehn Sekunden oder Minuten oder Stunden betragen und damit Standzeiten der Objekte überbrückt werden. Als Energiegeber kommen Schwungmassen mit Drehzahlreglern als mechanische Hilfsmittel oder Akkumulatoren oder Kondensatoren als elektrisch/elektronische Hilfsmittel in Frage. Sie speichern die Energie zwischen bzw. wandeln sie um und geben sie zum Nachlauf der elektrischen oder magnetischen Mittel ab, wobei gesetzmäßig auftretende Verlangsamungen der Drehbewegung infolge von Reibungen und anderen Beeinflussungen, bspw. durch Drehzahlregelung, zu berücksichtigen sind. Magnetometer, insbesondere dreiachsige Magnetometer, vermessen für jede Raumkoordinate die durch die Wirkung der Energiegeber entstehenden magnetischen Wirbelfelder, und geben entsprechende Wirbelfeldsignale an eine oder mehrere Auswerteeinrichtungen ab. Die Wirbelfelder können hinsichtlich ihrer magnetischen Merkmale (Rotationsfrequenz, Rotationsrichtung, Rotationsachse, Feldstärke usw.) unterschiedlich und veränderlich sein. Werden als magnetische Mittel starke bzw. große Permanentmagnete und entsprechende Rotationsfrequenzen verwendet, so können sich die Magnetometer in bspw. 50 m Entfernung befinden. Um ein Objekt sicher als ein und dasselbe wiedererkennen zu können, muss beim Nachlauf eine seiner Bewegungsgeschwindigkeit entsprechende, möglichst hohe Drehfrequenz erzielt werden. Diese beträgt vorteilhaft bei Schrittgeschwindigkeit > 4 Hz und bei Kfz-Fahrtgeschwindigkeiten > 8 Hz.
Damit ein Objekt von anderen Objekten im Detektionsraum sicher unterschieden (diskriminiert) werden kann, soll deren jeweilige Bewegung (Aufenthalt, Bewegungsspuren u. ä.) über die Dynamik der entsprechenden 3-D-Koordinaten analysiert werden. Mit der Erfindung kann einerseits das Geschwindigkeits- und Richtungsänderungsverhalten (z.B. bei Personen und Einkaufswagen das Schiebeverhalten) erfasst werden. Andererseits lassen sich mechanisch bedingte Unwuchten eines drehenden Rades, Schlingerbewegungen, Lastveränderungsbewegungen, Vibrationen, Trägheitseffekte etc. durch sich bewegende, vorzugsweise als Dauermagnete gestaltete Magnete als Schwingungsamplituden in x-, y-, z-Richtung hochgenau erfassen. Über fest einstellbare und identifizierbare Drehfrequenzen eines Drehmagneten bzw. einer Kombination von mehreren in Frequenz und Richtung unterschiedlich und selbstdrehenden Dauermagneten ist die Wiedererkennung und Unterscheidung von Objekten bei mechanisch und/oder elektrisch abgeleiteter und elektronisch gesteuerter Rotation des Dauermagneten möglich.
Bspw. können an allen vier Rädern eines Wagens oder Autos mehrere Drehfrequenzen und jeweils zwei Drehrichtungen fest eingestellt werden. Da der Abstand der vier Räder und damit die Koordinatendifferenzen der vier Räder im jeweiligen Koordinatensystem untereinander als feststehend bekannt ist, bestehen Variationskombinationen. Eine Wiedererkennung und Unterscheidung von Objekten ist auch über Transponder möglich, wobei zur Objektortung vorteilhaft die Transponder mit rotierenden Magneten kombiniert sind.

Die Erfindung wird nachstehend an Hand der schematischen Zeichnung näher erläutert. Es zeigen:
- Fig. 1: eine schematische Darstellung zur erfindungsgemäßen Anordnung mit elektrischen und magnetischen Mitteln sowie einer inneren Sensorik zur Nachlaufsteuerung,
- Fig. 2: eine Radnabe mit einem Permanentmagneten,
- Fig. 3: die Verwendung von elektrisch/elektronischen Mitteln zur Signalerzeugung,
- Fig. 4: ein GJehäuse mit zwei Permanentmagneten,
- Fig. 5: die Anwendung der Erfindung auf ein Kraftfahrzeug,
- Fig. 6: eine erfindungsgemäße Anordnung mit drei Nachlaufeinrichtungen und zwei Magnetometern.

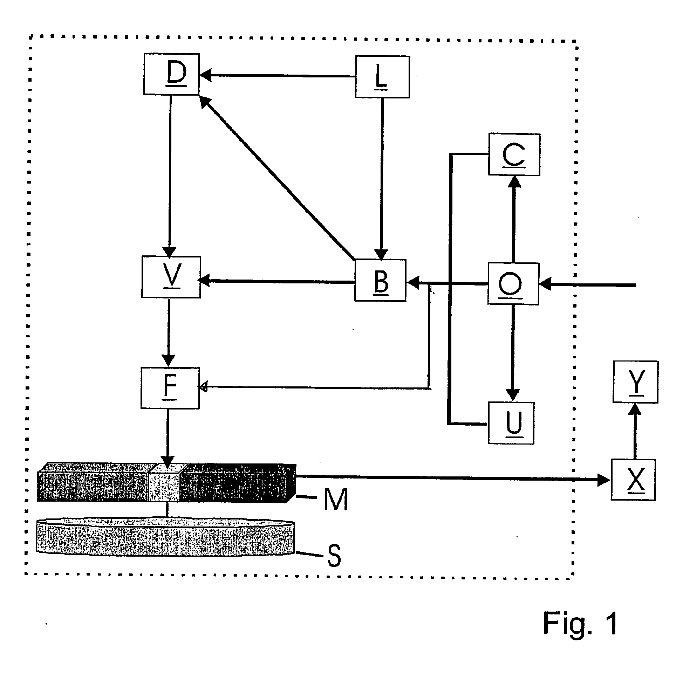

In Fig. 1 ist ein äußerer Antrieb (Generator) O dargestellt, mit dem ein Kondensator C und ein Akkumulator U verbunden sind. Beiden nachgeordnet sind ein Startgerät B und optional über einen Drehzahlregler D eine Elektromotor V, der über ein Freilaufgebtriebe (Freilaufkupplung) F einen Magneten M antreibt, welcher sich auf einem Schwungrad S befindet. Außerdem ist eine interne Sensorik L vorgesehen, welche auf das Startgerät B ebenso wie auf den Elektromotor V über den Drehzahlregler D einwirkt. Der äußere Antrieb O kann über das Freilaufgetriebe F das Schwungrad S mit dem Magneten M unmittelbar in Drehungen versetzen. Das dabei entstehende magnetische Wirbelfeld wird mit Hilfe eines Magnetometers X vermessen und die erhaltenen Messwerte an eine Auswerteeinrichtung Y zur Bestimmung von Raumpositionen, Rotationsfrequenzen, Rotationsrichtungen, Rotationsachsen, Feldstärken usw. weitergeleitet: Das Magnetometer X kann Bestandteil der Auswerteeinheit Y sein.
Wird der äußere Antrieb O abgeschaltet bzw. fällt er aus, dreht sich vermöge des Schwungrades S und des Freilaufgetriebes F der Magnet M noch eine gewisse Zeit, bspw. 8 - 30 s, im Nachlauf, so daß das Magnetometer X weiterhin Meßsignale an die Auswerteeinrichtung Y sendet. Dadurch ist eine Ortung eines Objektes O mit der erfindungsgemäßen Anordnung auch dann möglich, wenn das Objekt selbst zum Stillstand gekommen ist.
Der Kondensator C oder der Akkumulator U speichern unter der Wirkung des äußeren Antriebs O Energie, sodaß sie bei Abschaltung des äußeren Antriebs O Energie abgeben und bis zu ihrer Energieentladung der selbständige Magnet M über den Elektromotor V in Drehungen versetzen. In diesem Fall ersetzt der Entladungsvorgang das Freilaufgetriebe F.
Die interne Sensorik L kommt zur Anwendung, wenn unerwünschte Bewegungen Alarmsignale auslösen sollen. In dem Fall wird das Startgerät B durch die Sensorik L in Tätigkeit gesetzt und wirkt direkt oder über den vorzugsweise digitalen. Drehzahlregler D auf den Elektromotor V der den Magneten M zu Drehungen veranlasst. Das Startgerät B kann auch dazu dienen, die gesamte Anordnung in Gang zu setzen. Das Freilaufgetriebe F ist immer dann vorgesehen , wenn der Magnet M sich auf einen Schwungrad befindet. Der Drehzahlregler D dient letztenendes zur Festlegung der Drehfrequenz des Magneten M.

Die Nachlaufeinrichtungen der Fig. 1 können mit eigenen Antrieben auch an Karrossen oder anderen Gegenständen angebracht sein.

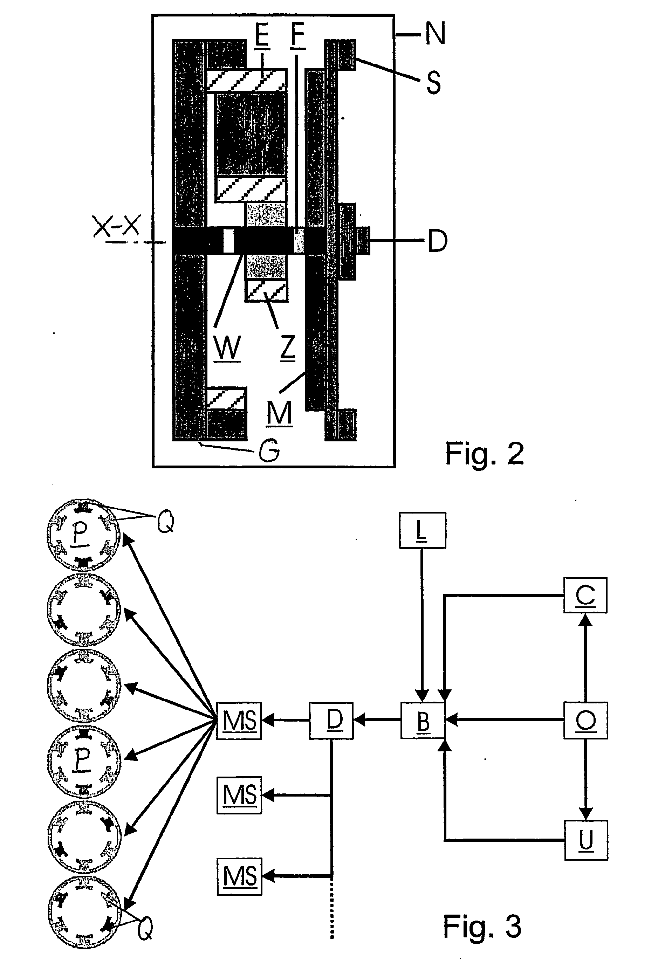

In Fig. 2 ist mit N ein Gehäuse bezeichnet, mit dem ein mit einer Innenverzahnung versehener Ring G läuft. Mit der Innenverzahnung steht eine Außenverzahnung eines Ritzels E im Eingriff, dass mit einem Zahnrad Z kämmt. Das Ritzel E und das Zahnrad Z sind auf einander abgestimmt und zur Erzeugung unterschiedlicher Rotationsfrequenzen auswechselbar. Durch Einschaltung eines weiteren, nicht dargestellten Zahnrades zwischen dem Ritzel E und dem Zahnrad Z ist die Drehrichtung des Schwungrades S umkehrbar. Das Zahnrad Z ist mit einer Welle W fest verkeilt, die über ein Freilaufgetriebe F und einen Drehzahlregler D mit einem Achszapfen eines Schwungrades S fest verbunden ist, auf dem ein Permanentmagnet M angeordnet ist. Das Schwungrad S, das Zahnrad Z und der Ring G haben die gleiche Drehachse X - X. Das Freilaufgetriebe F ermöglicht ein Weiterdrehen (Nachlaufen) des Schwungrades für eine bestimmte Zeit, bspw. 10 s, wenn die Radnabe N bereits zum Stillstand gekommen ist. Der mit dem Schwungrad S verbundene Magnet M erzeugt ein magnetisches Feld (Wirbelfeld) das sich entsprechend dem Schwungrad dreht und in einem nicht dargestellten Magnetometer (X in Fig. 1) Ortungssignale erzeugt. Der Drehzahlregler D ermöglicht die Einhaltung einer gewünschten Drehzahl bzw. eines gewünschten Drehzahlbereichs.

In Fig. 3 ist wieder ein Generator O erkennbar, mit dem ein Energiespeicher C oder U verbunden ist, der unter der Wirkung des Generators O Energie speichert und diese beim Abschalten des Generators G an ein Startgerät B abgibt. Das Startgerät B setzt über einen Drehzahlregler D elektrische Mittel MS in Tätigkeit, die im vorliegenden Fall je sechs Spulen Q (grau und schwarz dargestellt) in regelmäßiger Anordnung beinhalten. Innerhalb einer Periode werden in sechs dargestellten Phasen P jeweils zwei gegenüberliegende, schwarz dargestellte Spulen Q erregt. Diese sich wiederholenden Vorgänge erzeugen Wirbelfelder, die je nach der Ansteuerung der elektrischen Mittel MS unterschiedlich sein und mit Hilfe nicht dargestellter. Magnetometer vermessen werden können. Anstatt durch die Energiespeicher C und U kann das Startgerät B auch durch einen Sensor L betätigt werden, wobei mit Beginn der Bewegung eines nicht dargestellten Objektes oder an einem Objekt Energie an die elektrischen Mittel MS zur Erzeugung der Wirbelfelder abgegeben wird.

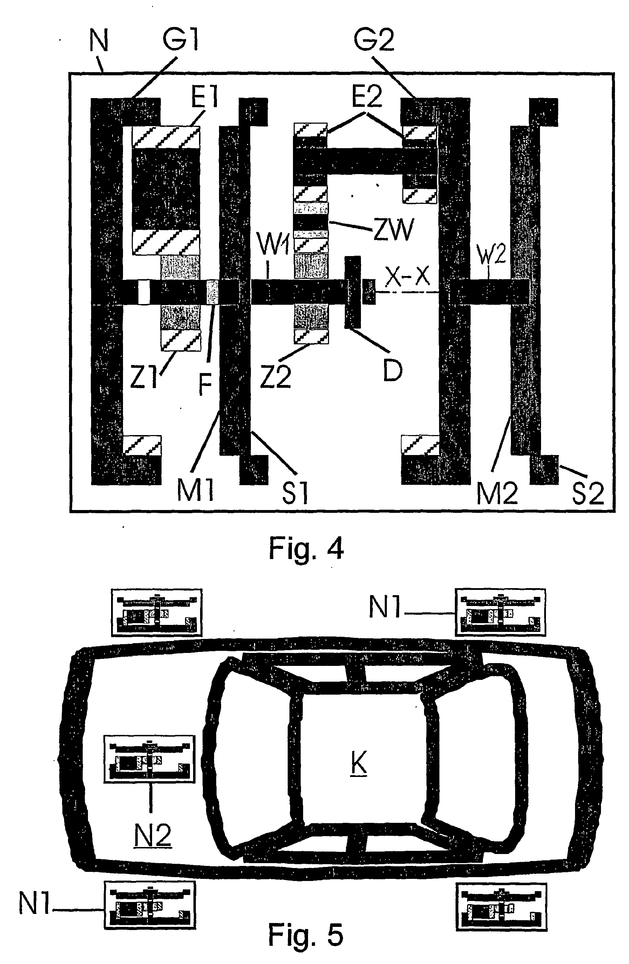

Mit einem Gehäuse N sind in Fig. 4 zwei mit Innenverzahnung versehene Ringe G1, G2 verbunden. Dem Ring G1 sind ein Zahnrad Z1, ein Ritzel E1, eine Schwungscheibe S1 und ein Magnet M1 zugeordnet. Dem Ring G2 sind ein Zahnrad Z2, ein Ritzel E2, ein Zwischenrad ZW zur Drehrichtungsumkehr, eine Schwungscheibe S2 und ein Magnet M2 zugeordnet. Der Ring G1, die Zahnräder Z1 und Z2, die Schwungscheibe S 1 und der mit ihm verbundene Magnet M1 sind mit einer Welle W1 verkeilt, die sich ebenso wie eine Welle W2 um eine Achse X - X dreht und an der noch ein Drehzahlregler D vorgesehen ist. Mit der Welle W2 sind der Ring G2 und die den Magneten M2 tragende Schwungscheibe S2 fest verbunden. Die Anordnung der Fig. 4 ermöglicht die Erzeugung unterschiedlicher Drehrichtungen und Drehfrequenzen sowie Achsrichtungen. Im letzteren Fall sind die Wellen W1 und W2 nicht um eine gemeinsame Achse X - X drehbar.

In Fig. 5 ist die Anwendung der erfindungsgemäßen NachlaufAnordnung auf ein Kraftfahrzeug K beschrieben. Dabei kann die Nachlaufanordnung den Radnaben N1 oder dem Motor N2 zugeordnet sein. Bei der Anwendung im Motor- bzw. Getriebeblock N2 kann auf die Auswechselbarkeit des Ritzels E und des Zahnrades Z zur Erzeugung unterschiedlicher Rotationsfrequenzen und Laufrichtungen verzichtet werden. Die Ankopplung eines von der Fahrzeug-Bordelektrik und -elektronik unabhängigen Generators (nicht dargestellt), der über einen elektronisch gesteuerten Elektromotor eine identifizierbare Rotationsfrequenz des rotierenden Dauermagneten mit Schwungrad und extrem langer Nachlaufzeit erzeugt, ermöglicht verschiedene Rotationsfrequenzen und Laufrichtungen. N1 und N2 können auch gemäß Fig. 1 mit Folge O+U, B, D, V, M oder mit der Folge L, B+U, D, V, M. ausgestattet sein.

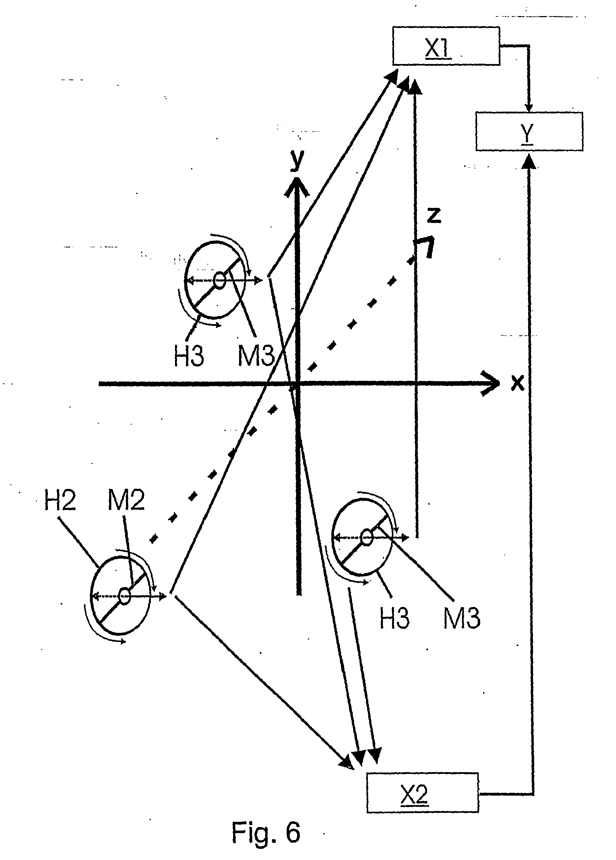

In Fig. 6 sind in einem räumlichen Koordinatensystem x, y, z drei Objekte H1, H2, H3 mit drehbaren Permanentmagneten M1, M2, M3 mit ihren entsprechenden Feldstärken und durch Pfeile gekennzeichneten Achsrichtungen vorgesehen, deren Drehfrequenzen f1, f2, f3 und deren Drehrichtungen d1, d2, d3 zu Zeitpunkten t1, t2, t3 sind. Ihre Koordinaten sind entsprechend x1, x2, x3, y1, y2, y3, z1, z2, z3. Bei Bewegung der Objekte H1, H2, H3 drehen sich auch die Magnete M1, M2, M3, und zwar länger als die Objektbewegungen stattfinden. Durch die sich drehenden Magnete werden in entfernt (bspw. 50 m) angeordneten Magnetometern X1 und X2, die z. B. AMR-Magnetometer sein können, Signale erzeugt, die eine Ortung und Identifizierung der Objekte gestatten. Die Messbereiche der Magnetometer müsssen sich nicht überlappen. Die räumliche Anordnung der Magnetometer kann unterschiedlich sein. Zur Die Verknüpfung einzelner oder aller Daten dient ein Auswertegerät Y.

Die vorstehenden Ausführungsbeispiele lassen erkennen, dass zur nachlaufenden Erzeugung von magnetischen Wirbelfeldern sowohl magnetische und mechanische Mittel wie auch elektrisch-elektronische Mittel Verwendung finden können. Der Permanentmagnet M kann kugel-, stab-, scheiben- oder zylinderförmig gestaltet sein und durch einen Elektromagneten ersetzt werden. Die erfindungsgemäße Anordnung kann auch so gestaltet sein, dass ein Dauermagnet oder mehrere Dauermagnete sich mit unterschiedlicher Drehfrequenz und/oder Drehrichtung bewegen. Hierzu kann sowohl eine mechanische als auch eine elektronische Drehzahl- und Drehrichtungsregelung verwendet werden. Dabei erfolgt die Erkennung und das "Tracking" der jeweiligen Drehfrequenz, Achs- und Drehrichtung sowie der Magnetfeldamplitude jedes einzelnen rotierenden Dauermagneten zur Differenzierung und Identifizierung der Objekte. Befinden sich an einem zeitweilig in Ruhe verharrenden Objekt mehrere rotierende Dauermagnete mit unterschiedlicher Drehfrequenz und/oder Achs-/Drehrichtung und/oder unterschiedlichem Volumen, so können diese zu Identifizierungszwecken gekoppelt sein.

Ein oder mehrere Magnetometer erkennen das Magnetfeld der rotierenden Magnete und ermittelt durch mathematische Berechnung unter Zuhilfenahme von Fouriertransformationen, Potenz- und Winkelfunktionen zum jeweiligen Zeitpunkt mehrere mögliche Magnetfeldschwerpunkte im Raum (Raumpunkte), von denen einer der reale Schwerpunkt ist, der zeitlich und logisch abgeleitet wird, und die anderen als virtuelle Schwerpunkte bezeichnet werden. So sind bspw. vier Schwerpunkte durch folgende Terme gegeben: [x₁(tₙ), y₁(tₙ), z₁(tₙ)]; [x₂(tₙ), y₂(tₙ), z₂(tₙ)]; [x₃(tₙ), y₃(tₙ), z₃(tₙ)]; [x₄(tₙ), y₄(tₙ), z₄(tₙ)], wobei die Indices 1 bis 4 die zu einem Zeitpunkt tₙ gehörenden Raumkoordinaten x, y, z der vier Schwerpunkte kennzeichnen. Entsprechend der Abtast- bzw. Analysenfrequenz werden alle Raumpunkte mit Haupt- bzw. Sub-Identnummern sowie mit deren Ausgangs- und aktuellen Drehfrequenzen bzw. Achs-/Drehrichtungen sowie mit aktuellen Feldamplitudenwerten versehen und zur weiteren Analyse gespeichert.
Kreuzen sich die Bewegungsspuren von z. B. zwei rotierenden Dauermagneten und/oder fallen z. B. in der Nachlaufphase ihre realen Standorte bei darüber hinaus gleicher aktueller Drehfrequenz und/oder Achs-/Drehrichtung und/oder Feldamplitude zusammen, so können die über die vorgenannte mathematische, in einem geeigneten Auswertegerät vorgenommene Berechnung der Magnetfeldvektoren ermittelten virtuellen Sub-Schwerpunkte (Standorte) zur Differenzierung der zeitweilig gleichen Signale in der Spuranalyse verwendet werden.
Zur Erkennung, Wiedererkennung und Identifizierung einzelner oder mehrerer rotierender Dauermagnete wird der gesamte mögliche Frequenzbereich, bspw. unter zur Hilfenahme von FourierTransformationen der Signale oder werden vorher definierte Frequenzbereiche vom Magnetometer über Frequenzfilter bzw. Frequenzraster abgetastet. Im Verlauf der weiteren Analyse der durch ihre Merkmale gespeicherten Raumpunkte, wobei sich diese Merkmale zumindest teilweise auch dynamisch verändern können, ist es möglich, die einzelnen, mit Identnummern versehenen und ursprünglich mit einer eingestellten bzw. mit der zuerst im Messbereich ermittelten Drehfrequenz rotierenden elektrischen oder magnetischen Mittel auch in ihrer Nachlaufphase bis zu ihrem Stillstand bzw. nach ihrem Neustart (Bewegungsimpuls) zu orten und zu identifizieren.
Das "Tracking" der Frequenz- und Amplitudenänderungen ermöglicht es, neben der Objektortung und - verfolgung auch evtl. auftretende äußere permanente und/oder zeitweilige Störfaktoren zu erkennen und zu berücksichtigen.
Über die ermittelten Raumkoordinaten, Drehfrequenzen, Achs-/Drehrichtungen und Feldamplituden kann neben der realen Bewegungsspur auch das spezifische Bewegungsverhalten des mit einem identifizierbaren rotierenden Magneten versehenen Objektes ermittelt werden. Durch den Einsatz neuronaler Funktionalität sind weitere Identifikationsmerkmale generierbar, wie Bewegungs-, Schub-, Trägheits-, Beschleunigungs-, Standverhalten, Veränderungen in der Belastung des Objektes usw..
Werden an einem sich bewegenden Objekt an verschiedenen Punkten rotierende Magnete angebracht, so kann auch das Bewegungsverhalten der verschiedenen Punkte zueinander, z. B. bei Verformungen innerer und äußerer Strukturen, hochgenau ermittelt und ihre Positionen zueinander bzw. ihre Positionsänderungen exakt vermessen werden.

Die Erfindung hat den Vorteil, dass die erzeugten magnetischen Wirbelfelder im Gegensatz zu optischen, akustischen und anderen elektromagnetischen Signalen große bzw. hohe oder dicke, insbesondere metallische, elektrisch nicht optimal leitende Objekte durchdringen. Weiterhin können sie nicht manipuliert oder nur mit hohem Aufwand verfälscht werden. Der Material- und Kostenaufwand zur Erzeugung der magnetischen Wirbelfelder (als Sender) ist gering. Die Magnetometer (als Detektoren) sind als elektronische Schaltkreise bzw. Baugruppen stoß- und schwingungsresistent und arbeiten auch unter schwierigen dynamischen Bedingungen. Auch hinsichtlich ihrer Positionierbarkeit sind sie sehr variabel. Die Genauigkeit und Reichweite der Detektion ist abhängig von der Stärke der Sendersignale (Volumen und Magnetisierung des Dauermagneten), der Messrate und der Empfindlichkeit des Magnetometers (Detektors).

Hauptanwendungsgebiete der Erfindung sind Bewegungs- und Verhaltensanalysen, Trigger-, Informations-, Alarm- und Objektsuchfunktionen, Verknüpfungen mit anderen sensorinformationen und Koordinatensytemen sowie die Steuerung externen Sensoren und Aktionen in Handel, Logistik, Verkehr, Sicherheit, Forschung und Entwicklung die Ortung, Identifizierung und Verfolgung von bspw. Einkaufswagen, Gepäckwagen, Transportfahrzeugen und Kraftfahrzeugen sowie die Vermessung von Strukturen und deren Verformungen, insbesondere an Fahrzeugen.

### Bezugszeichenliste

- B: Startgerät
- C: Kondensator
- D: Drehzahlgeber
- F: Freilaufgetriebe
- G, G1, G2: Ring
- H, H1, H2, H3: Objekte
- K: Fahrzeug
- M, M1, M2, M3: Magnete
- N, N1, N2: Gehäuse
- O: äußerer Antrieb, Generator
- S, S1, S2: Schwungmasse
- U: Akkumulator
- V: Elektromotor
- W, W1, W2: Wellen
- X, X1, X2: Magnetometer
- Y: Auswertegerät
- Z: Zahnrad
- X - X: Achse

## Patentansprüche

1. Anordnung zum Ermitteln der Raumposition und des Bewegungsverhaltens von zumindest zeitweilig verharrenden Objekten (H), bei der jedem der Objekte (H) mindestens ein elektrisches oder magnetisches Mittel (MS, M) zur Erzeugung von magnetischen Wirbelfeldern zugeordnet ist mindestens ein Magnetometer (X) entsprechend den räumlichen Koordinatenrichtungen (x, y, z) zur Erzeugung und Messung der Wirbelfeldsignale vorgesehen ist, die bei der Bewegung der magnetischen Felder entstehen, wobei eine Auswerteeinrichtung (Y) zum Auswerten der Wirbelfeldsignale vorgesehen ist, **dadurch gekennzeichnet, dass** jedem Objekt (H) ein Energiegeber (C, S, U) zugeordnet ist, der mit Beginn der Bewegung oder des Verharrens des zugehörigen Objektes (H) Energie an das elektrische oder magnetische Mittel (MS, H) zum Erzeugen der Wirbelfelder zeitlich begrenzt abgibt.

2. Anordnung gemäß Anspruch 1, **dadurch gekennzeichnet, dass** der Energiegeber eine Schwungmasse (S) als Energiespeicher ist, der an das Objekt (H) über ein Freilaufgetriebe (F) angekoppelt ist.

3. Anordnung gemäß Anspruch 2, **dadurch gekennzeichnet, dass** der Permanentmagnet (M) als Schwungmasse (S) ausgebildet ist.

4. Anordnung gemäß Anspruch 1, **dadurch gekennzeichnet, dass** der Energiegeber ein Akkumulator (U) ist, der als Energiespeicher wirkt.

5. Anordnung gemäß Anspruch 1, **dadurch** gegennzeichnet, dass der Energiespeicher ein Kondensator (C) ist, der als Energiespeicher wirkt.

6. Anordnung gemäß mindestens einem der vorstehenden Ansprüche, **dadurch gekennzeichnet, dass** die im Energiegeber (C, S, U) gespeicherte Energie durch die Bewegung der elektrischen oder magnetischen Mittel (MS, M) infolge Drehens der Schwungmasse (S) unmittelbar oder infolge Umwandlung der Energie des Kondensators (C) und/oder des Akkumulators (U) im Motor (V) mittelbar zeitweilig ein magnetisches Wirbelfeld erzeugt.

7. Anordnung gemäß Anspruch 6, **dadurch gekennzeichnet, dass** eine Sensorik (L) über ein Startgerät (B) auf den Motor (V) wirkt und zeitweilig ein magnetisches Wirbelfeld erzeugt.

8. Anordnung gemäß Anspruch 6, **dadurch gekennzeichnet, dass** der Energiegeber (C, S, U) mehrere unterschiedliche magnetische Wirbelfelder erzeugt.

9. Anordnung gemäß Anspruch 8, **dadurch gekennzeichnet, dass** die magnetischen Wirbelfelder sich durch ihre Rotationsfrequenzen, ihre Rotationsrichtungen, ihre Rotationsachsen und/oder ihre Feldstärken unterscheiden.

10. Anordnung gemäß Anspruch 9, **dadurch gekennzeichnet, dass** die magnetischen Merkmale der Wirbelfelder veränderlich sind.

11. Anordnung gemäß Anspruch 10, **dadurch gekennzeichnet, dass** aus der Dynamik der Veränderungen der magnetischen Merkmale mit Beginn der Bewegung oder beim Verharren eines Objektes (H) oder mehrerer Objekte (H1, H2; H3) die Wiedererkennung der Objekte erfolgt.

12. Anordnung gemäß Anspruch 1 und 9, **dadurch gekennzeichnet, dass** zur Identifizierung der Objekte (H) logische Kombinationen unterschiedlicher Merkmale der magnetischen Wirbelfelder benutzt werden.

13. Anordnung gemäß Anspruch 1 und 9, **dadurch gekennzeichnet, dass** die magnetischen Merkmale und ihre Veränderungen kodiert werden.

14. Anordnung gemäß Anspruch 12 und 13, **dadurch gekennzeichnet, dass** die kodierten magnetischen Merkmale zur Identifizierung der Objekte (H) benutzt werden.

15. Anordnung gemäß Anspruch 1 und 14, **dadurch gekennzeichnet, dass** die Messbereiche der Magnetometer (X) sich nicht überlappen.

16. Anordnung gemäß Anspruch 1, **dadurch gekennzeichnet, dass** zur Identifizierung der Objekte (H) und Verifizierung ihrer realen Raumpunkte virtuelle Raumpunkte mit benutzt werden.

## Claims

1. Arrangement for the determination of the three-dimensional position and motion behavior of objects (H) remaining at least temporarily in the same position, and in said arrangement each of the objects (H) is provided with at least one electric or magnetic element (MS, M) for generating magnetic rotary fields, and at least one magnetometer (X) is installed according to the three-dimensional coordinates (x, y, z) for generating and measuring the rotary field signals that are produced by the motion of the magnetic fields, with one analyzing system (Y) being included for evaluating the rotary field signals, wherein each object (H) is provided with an energy supplying unit (C, S, U) that delivers energy to the electric or magnetic element (MS, H) in a temporarily limited manner with the beginning of the motion of the corresponding object (H) or its remaining in the same position.

2. Arrangement according to claim 1, wherein the energy supplying unit is a flywheel mass (S) used as an energy storage that is coupled to the object (H) via an overrunning clutch gearbox (F).

3. Arrangement according to claim 2, wherein the permanent magnet (M) is designed as a flywheel mass (S).

4. Arrangement according to claim 1, wherein the energy supplying unit is an accumulator (U) that acts as an energy storage.

5. Arrangement according to claim 1, wherein the energy supplying unit is a capacitor (C) that acts as an energy storage.

6. Arrangement according to at least one of the previous claims, wherein the energy stored in the energy supplying unit (C, S, U) temporarily generates a magnetic rotary field in the motor (V) directly by the motion of the electric or magnetic elements (MS, M), with said motion being caused by the rotation of the flywheel mass (S) indirectly or due to the conversion of the energy of the capacitor (C) and/or the accumulator (U).

7. Arrangement according to claim 6, wherein the sensory system (L) acts on the motor (V) via a starting device (B) and temporarily generates a magnetic rotary field.

8. Arrangement according to claim 6, wherein the energy supplying unit (C, S, U) generates several magnetic rotary fields.

9. Arrangement according to claim 8, wherein the magnetic rotary fields differ in their rotation frequencies, their rotation directions, their rotation axes and/or their field strengths.

10. Arrangement according to claim 9, wherein the magnetic characteristics of the rotary fields are changing.

11. Arrangement according to claim 10, wherein the objects are recognized by the dynamics of the changes of the magnetic characteristics with the beginning of the motion or with the remaining of one object (H) or several objects (H1; H2; H3) in the same position.

12. Arrangement according to claims 1 and 9, wherein logic combinations of different characteristics of the magnetic rotary fields are used for the identification of the objects (H).

13. Arrangement according to claim 1 and 9, wherein the magnetic characteristics and their changes are coded.

14. Arrangement according to claims 12 and 13, wherein the coded magnetic characteristics are used for the identification of the objects (H).

15. Arrangement according to claims 1 and 14, wherein the measuring ranges of the magnetometers (X) do not overlap each other.

16. Arrangement according to claim 1, wherein three-dimensional virtual points are also used for the identification of the objects (H) and the verification of their real three-dimensional points.

## Revendications

1. La configuration pour déterminer la position et le comportement dans d' objets en mouvement mais au moins temporairement immobiles (H), où au moins un moyen électrique ou magnétique (MS,M) destiné à la génération de champs magnétiques rotatifs est attribué à chacun des objets (H), la présence d'au moins un magnétomètre (X) étant prévue en fonction des sens des coordonnées dans l'espace (x,y,z) pour engendrer et mesurer les signaux des champs rotatifs créés, un dispositif d'analyse (Y) étant prévu pour interpréter les signaux provenant des champs rotatifs, est **caractérisée en ce qu'**à chacun des objets (H) est attribué un fournisseur d'énergie (C, S,U) qui, dès la mise en mouvement ou de l'immobilisation de l'objet attribué (H), fournit de l'énergie au dispositif magnétique ou électrique (MS,H) pendant un laps de temps déterminé pour produire des champs rotatifs.

2. La configuration selon la revendication 1 est **caractérisée en ce que** le fournisseur d'énergie constitue une masse d'inertie (S) faisant fonction d'accumulateur d'énergie accouplé à l'objet (H) par l'intermédiare d'un embrayage à roue libre (F).

3. La configuration selon la revendication 2 est **caractérisée en ce que** l'aimant permanent (M) est conçu comme masse d'inertie (S).

4. La configuration selon la revendication 1 est **caractérisée en ce que** le fournisseur d'énergie (U) fait office d'accumulateur d'énergie.

5. La configuration selon la revendication 1 est **caractérisée en que** l'accumulateur d'énergie est un condensateur (C) faisant office d'accumuateur d'énergie..

6. La configuration selon l'une des revendications précédentes au moins est **caractérisée en ce que** l'énergie accumulée dans le fournisseur d'énergie (C, S, U), par l'intermédiaire des moyens électriques ou magnétiques (MS, M) produit directement par le biais de la rotation de la masse d'inertie (S) ou indirectement par le biais de la transformation de l'énergie du condensateur (C) et/ou de l'accumulateur (U) un champ magnétique rotatif dans le moteur (V).

7. La configuration selon la revendication 6 est **caractérisée en ce qu'**un système d'analyse sensorielle intervient sur le moteur (V) par le biais d'un démarreur (B), engendrant temporairement un champ magnétique rotatif.

8. La configuration selon la revendication 6 est **caractérisée en ce que** le fournisseur d'énergie (C,S,U) génère plusieurs champs magnétiques rotatifs différents.

9. La configuration selon la revendication 8 est **caractérisée en ce que** les champs de rotation magnétiques se distinguent les uns des autres par leurs fréquences de rotation, leurs sens de rotation, leurs axes de rotations et/ou leurs intensité des champs.

10. La configuration selon la revendication 9 est **caractérisée en ce que** les caractéristiques magnétiques des champs rotatifs sont variables.

11. La configuration selon la revendication 10 est **caractérisée en ce que** c'est en raison de la dynamique des variations des caractéristiques magnétiques que la reconnaissance des objets se produit au moment de la mise en mouvement ou pendant l'immobilisation d'un objet (H) ou de plusieurs objets (H1, H2, H3).

12. La configuration selon les revendications 1 et 9 est **caractérisée en ce que** des combinaisons logiques des différents caractéristiques des champs rotatifs sont employées pour l'identification des objets (H).

13. La configuration selon les revendications 1 et 9 est **caractérisée en ce que** les caractéristiques magnétiques et leurs modifications sont codées.

14. La configuration selon les revendications 12 et 13 est **caractérisée en ce que** les caracteristiques codées sont employées pour identifier les objets (H).

15. La configuration selon les revendications 1 et 14 est **caractérisée en ce que** les champs de mesures des magnétomètres (X) ne se superposent pas.

16. La configuration selon la revendication 1 est **caractérisée en ce que** des points virtuels dans l'espace sont utilisés pour identifier les objets (H) et pour vérifier leur placement réel dans l'espace.
